# EUROPÄISCHE PATENTSCHRIFT

(11) **EP 0 987 933 B1**
(45) Veröffentlichungstag und Bekanntmachung des Hinweises auf die Patenterteilung: **21.08.2002**
(21) Anmeldenummer: 98932085.8
(22) Anmeldetag: 26.05.1998
(51) Int. Cl.: A01F 7/06

(54) **EINZUGSBEREICH EINES AXIALABSCHEIDERS**
INSERT ZONE FOR AXIAL SEPARATOR
ZONE D'INTRODUCTION D'UN SEPARATEUR AXIAL

(30) Priorität: 27.05.1997 DE 19722079
(43) Veröffentlichungstag der Anmeldung: 29.03.2000
(73) Patentinhaber: CLAAS Selbstfahrende Erntemaschinen GmbH, 33428 Harsewinkel (DE)
(72) Erfinder: DAMMANN, Martin, D-33428 Harsewinkel (DE); HEIDJANN, Franz, D-33428 Harsewinkel (DE); KÜHN, Bodo, D-33330 Gütersloh (DE)
(74) Vertreter: Weeg, Thomas
(86) Internationale Anmeldenummer: EP9803102
(87) Internationale Veröffentlichungsnummer: WO98053662

(56) Entgegenhaltungen:
- EP-A- 0 244 862
- EP-A- 0 591 688
- EP-A- 0 631 716
- DE-A- 2 048 892
- FR-A- 2 525 429
- US-A- 4 291 709
- US-A- 5 145 462

## Beschreibung

Die vorliegende Erfindung betrifft einen Einzugsbereich eines Axialabscheiders der aus, einem Abscheiderotor und einer in ihrem vorderen Bereich konisch ausgeführten und mit ihrer verjiengung in Gufflußrichtung weisenden ummantelung besteht.

Guttransportprobleme, die im Übergabebereich zwischen dem, das Erntegut tangential zuführenden Schrägförderschacht bzw. den oben beschriebenen Ein- oder Mehrtrommeldreschwerken mit nachfolgender Zuführtrommel und der dazu rechtwinklig verlaufenden axialen Weiterleitung in den bekannten Axialfluß-Dresch- und Trenneinrichtungen oder Axialabscheidern haben zu sehr unterschiedlich ausgeführten Einzugsbereichen der Rotoren und deren Verkleidung geführt.

Für achsparallele und im Einzugsbereich zylindrisch ausgeführte Doppelrotoren sind trapezförmige und konische Erweiterungen der oberen Halbschale der Rotorverkleidung des Einzugsbereichs bekannt (EP 0 244 862). Um eine störungsarme Annahme und Aufteilung des tangential zugeführten Gutes im Einzugsbereich der Rotoren zu gewährleisten, sind diese trapezförmigen oder konischen Erweiterungen so ausgeführt, daß sie sich am Anfang des Einzugsbereichs über beide Rotoren erstrecken und an dessen Ende derart verjüngen, daß die Schnittkanten dieser Erweiterung mit der übrigen Rotorverkleidung in der Draufsicht aufeinander zu laufen und am Ende des Einzugsbereichs mittig zwischen beiden Rotoren zusammmenfallen. Auf diese Weise wird eine störungsarme Gutannahme im Einzugsbereich durch eine herstellungstechnisch aufwendige und damit kostenintensive Rotorverkleidung erkauft. Der im oberen Teil des Einzugsbereichs große Abstand zwischen den Mitnehmern der Rotoren und der Rotorverkleidung erfordet aufgrund des Fehlens von Förder- oder Leiteinrichtungen außerdem einen entsprechend hohen Verdichtungsgrad des Gutes in diesem oberen Bereich, damit auch außerhalb des Wirkbereichs der Mitnehmer ein sicherer Guttransport gewährleistet wird.

Für Mähdrescher der Axialflußbauart sind desweiteren Ein- und Zweirotorausführungen bekannt, die in ihrem vorderen Bereich mit sich konisch verjüngenden flügel- oder wendelförmigen Elementen versehen sind, welche von ebenfalls konisch verlaufenden Einzugsgehäusen ummantelt werden. Mit diesen Ausführungsformen soll eine sichere Annahme und Teilung sowie eine auf die entsprechenden Rotordurchmesser abgestimmte Verringerung der Breite des aus dem Schrägförderschacht austretenden Gutstranges erreicht werden. Einen wesentlichen Nachteil derart ausgeführter Axialflußmähdrescher bildet der im oberen oder unteren Bereich der Rotorverkleidung liegende stufige Übergang vom Einzugs- zum Dresch- und Trennbereich. Die in diesen Zonen auftretenden Umschichtungsvorgänge führen zu einer Erhöhung des Leistungsbedarfs.

Bezüglich der Vergrößerung des Abstandes zwischen den Dresch- und Trennrotoren der Axialflußmähdrescher und den oberen Halbschalen der Rotorverkleidungen sind Abstandsschienen bekannt (EP 0 631 716), die zwischen den oberen und unteren Halbschalen eingesetzt werden. Die Nachteile dieses Konzepts liegen neben dem hohen Montageaufwand beim Einsetzen der geteilten, für den Dresch- und Trennbereich unterschiedlich ausgeführten Abstandsschienen in der oben beschriebenen energetisch ungünstigen, stufig ausgeführten Innenwand der Rotorverkleidung.

Der Erfindung liegt die Aufgabe zugrunde, den Einzugsbereich von Axialflußdresch- und Trennrotoren oder Axialabscheidern so auszuführen, daß dessen Funktionsvollzug verbessert wird.

Erfindungsgemäß wird die Aufgabe dadurch gelöst, daß die ein- oder mehrteilig ausgeführte obere Ummantelung des Einzugsbereichs von einem am Beginn des Rotoreinlaufs halbkreisförmigen Querschnitt bis zum Ende des Einzugsbereichs kontinuierlich in einen dem Querschnitt der übrigen oberen Ummantelung entsprechenden exzentrischen Querschnitt übergeht. Auf diese Weise wird erreicht, daß im oberen, zwischen Rotor und Verkleidung liegenden, nichtabscheidenden Bereich der verdichtete Gutstrang aufgelockert und die Reibung zwischen ihm und der oberen Ummantelung des Einzugsbereichs verringert wird. Der stufenlose Übergang vom Einzugs- in den Dresch- oder Trennbereich verhindert außerdem energetisch ungünstige Umschichtungsund Verwirbelungsvorgänge.

Um den Rotor mit geringem Montageaufwand auf der den Zuführeinrichtungen entgegengesetzten rückwärtigen Seite des Mähdreschers herausnehmen zu können, sind die wendelförmigen Mitnahmeelemente des konischen Rotoranfangs zweigeteilt ausgeführt. Dabei sind die mit dem Rotor verbundenen wendelförmigen Grundkörper so gestaltet, daß im Bereich des Rotoranfangs ein zylindrischer Rotorkern entsteht, dessen Hüllkreisdurchmesser nicht größer als der des übrigen Rotors ist. Die wendelförmigen Grundkörper sind mit ebenfalls wendelförmigen auswechselbaren Verschleißelementen versehen, deren Höhe vom Anfang des Rotors bis zum Ende des Einzugsbereichs abnimmt und dadurch die gutannahmeverbessernde konische sich in Gutflußrichtung verjüngende Form des Rotoranfangs erzeugt.

Zur Verbesserung des Guttransportes im Einzugsbereich eines Dresch- und Trenn- oder Axialabscheiderotors werden an der Innenseite der oberen Verkleidung des Einzugsbereichs in Gutflußrichtung weisende Leitschienen vorgesehen, deren Höhe in dem Maß zunimmt, wie sich der Hüllflächendurchmesser des konischen Rotoranfangs verringert, so daß im gesamten oberen Abschnitt des Einzugsbereichs der Abstand zwischen den Oberkanten der Leitschienen und der Verschleißelemente konstant niedrig bleibt. Die Innenseite der unteren Verkleidung des Einzugsbereichs ist in bekannter Weise mit Leitschienen versehen, die ebenfalls den Guttransport unterstützen, jedoch konstante Höhe aufweisen.

Um bereits im Einzugsbereich eine Abscheidung von losen in der Gutschicht eingelagerten Körnern und damit eine Entlastung des je nach Rotorausführung folgenden Dresch- oder Trennbereichs zu erreichen, wird die untere aushängbare Ummantelung des Einzugsbereichs mit Öffnungen versehen.

Im folgenden wird ein Ausführungsbeispiel der Erfindung an Hand der Zeichnungen näher erläutert. Es zeigt:
- Figur 1: die Seitenansicht eines Mähdrescherausschnitts mit Mehrtommeldreschwerk, Zufiihrtrommel und nachgeschaltetem Axialabscheider mit erfindungsgemäßem Einzugsbereich
- Figur 2: die Drausicht auf einen Axialabscheider mit erfindungsgemäßem Einzugsbereich und ohne die obere Ummantelung des Einzugsbereichs
- Figur 3: eine räumliche Darstellung des erfindungsgemäßen Einzugsbereichs am Beispiel eines Axialabscheiders
- Figur 4: die schematische Darstellung des Rotor- und Verkleidungsquerschnitts am Anfang des Einzugsbereichs entlang der Schnittlinie IV-IV in Figur 1
- Figur 5: die schematische Darstellung des Rotor- und Verkleidungsquerschnitts am Ende des Einzugsbereichs entlang der Schnittlinie V-V in Figur 1

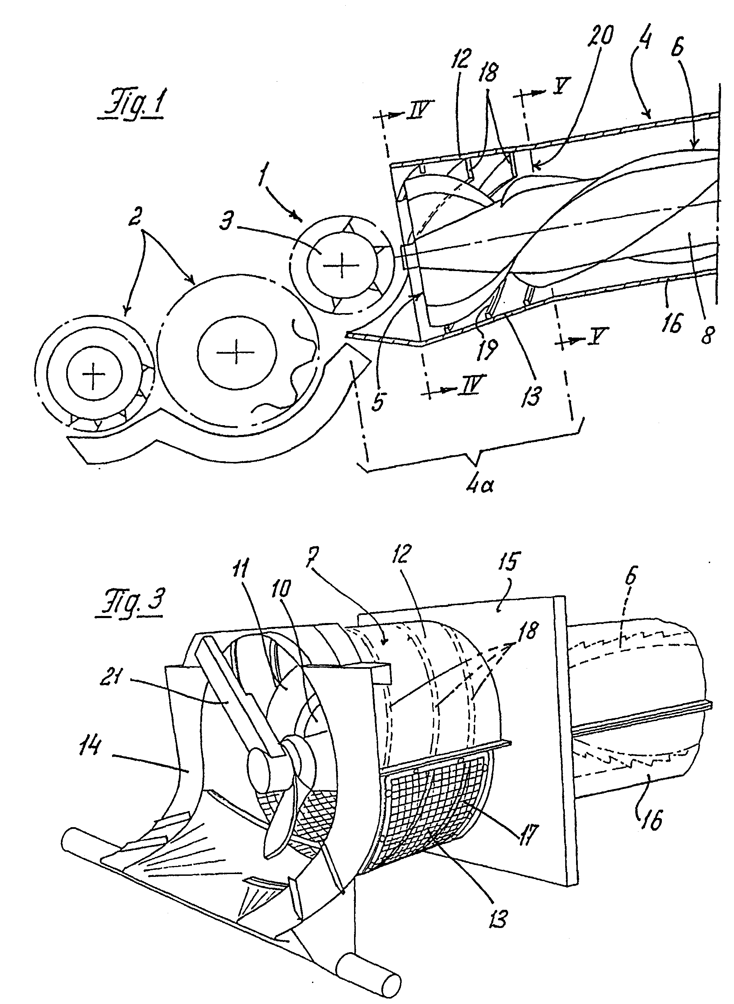

Der in Figur 1 dargestellte Teilbereich eines nicht näher erläuterten Mähdreschers 1 ist mit einem ebenfalls nicht näher erläutertem Zweitrommel-Tangentialdreschwerk 2, einer Zuführtrommel 3 und einem dieser Zuführtrommel 3 nachgeschaltetm Axialabscheider 4 mit erfindungsgemäßem Einzugsbereich 4a ausgerüstet, wobei an Stelle des im Ausführungsbeispiel eingesetzten Zweitrommel-Tangential- dreschwerks 2 beliebige Tangentialdreschwerke der Ein- und Mehrtrommelbauweise eingesetzt werden können.

Der Axialabscheider 4 ist auf nicht näher beschriebene Weise so im Mähdrescher fixiert, daß seine Lage zur Zuführtrommel 3 unveränderbar ist.

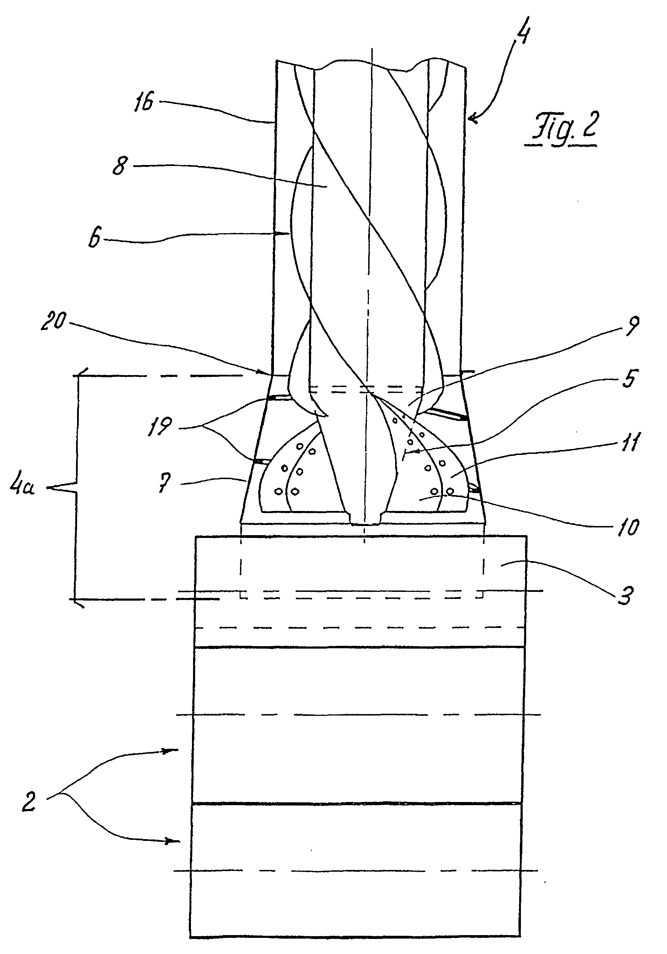

Der Einzugsbereich 4a (Figur 2) des Axialabscheiders 4 setzt sich aus dem noch näher zu beschreibenden erfindungsgemäßen Rotoreinlauf 5 des Abscheiderotors 6 und der ebenfalls noch näher zu beschreibenden erfindungsgemäßen Verkleidung des Einzugsbereichs 7 zusammen.

Das Kernrohr 8 des Abscheiderotors 6 weist einen zylindrischen Querschnitt auf und ist im Einzugsbereich 4a mit einer kegelstumpfförmigen Erweiterung 9 versehen, deren großer Durchmesser am Ende des Einzugsbereichs 4a dem des Kernrohrs 8 entspricht. Auf die Umfangsfläche der kegelstumpfförmigen Erweiterung 9 des Abscheiderotors 6 sind zwei zueinander um 180° versetzt angeordnete wendelförmige Grundkörper 10 aufgeschweißt, deren Höhe sich in dem Maß verringert, wie der Radius der kegelstumpfförmigen Erweiterung 9 zunimmt. Dadurch wird ein zylindrischer Rotoranfang geschaffen, dessen Hüllkreisdurchmesser nicht größer als der des übrigen Abscheiderotors 6 ist. Auf die wendelförmigen Grundkörper 10 sind erfindungsgemäß ebenfalls wendelförmige Verschleißelemente 11 aufgeschraubt, deren Höhe vom Anfang zum Ende der wendelförmigen Grundkörper 10 abnimmt und die so die konische sich in Gutflußrichtung verjüngende Form des Rotoreinlaufs 5 erzeugen.

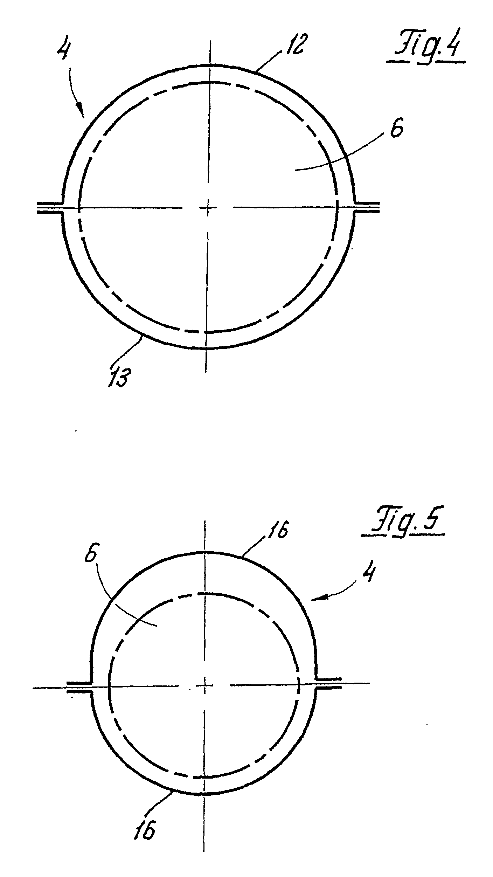

Die Verkleidung des Einzugsbereichs 7 (Figur 3) setzt sich aus der erfindungsgemäßen und noch näher zu beschreibenden oberen und unteren Ummantelung 12,13, dem Gutannahmekopf 14 und dem Adaptierflansch 15 zusammen. Die erfindungsgemäße obere Ummantelung 12 ist so ausgeführt, daß sie am Anfang des Einzugsbereichs 4a einen mit der oberen Halbschale der Verkleidung des Abscheidebereichs 16 fluchtenden kreisförmigen Querschnitt aufweist (Figur 4) und bis zum Ende des Einzugsbereichs 4a kontinuierlich in einen dem Querschnitt der oberen Halbschale der Verkleidung des Abscheidebereichs 16 entsprechenden exzentrischen Querschnitt übergeht (Figur 5). Sie ist an ihrem vorderen, halbkreisförmigem Ende mit dem Gutannahmekopf 14 und an seinem hinteren, exzentrisch ausgeführtem Ende mit dem Adaptierflansch 15 verschweißt.

Die untere Ummantelung 13 weist einen halbkreisförmigen und in Richtung Einzugsbereichsende 20 konisch abnehmenden Querschnitt auf. Die aus dünnwandigem Blech bestehende untere Ummantelung 13 ist in regelmäßigen oder unregelmäßigen Abständen mit Öffnungen versehen, die neben der im Ausführungsbeispiel dargestellten Lochform 17 von beliebiger Geometrie sein können. Die untere Ummantelung 13 wird mittels nicht näher dargestellter hackenförmiger Elemente in ebenfalls nicht näher dargestellte Aussparungen der oberen Ummantelung 12 eingehängt und an ihrem übrigen Umfang in ebenfalls nicht näher dargestellter Weise mit dem Gutannahmekopf 14, dem Adaptierflansch 15 und der verbleibenden Seitenkante der oberen Ummantelung 12 lösbar verbunden. Ihre dem Rotoreinlauf 5 zugewandte Innenseite ist in bekannter Weise mit nicht näher beschriebenen Leitschienen (19) versehen.

Die obere Ummantelung 12 des Einzugsbereichs 4a ist an ihrer dem Rotoreinlauf 5 zugewanden Innenseite mit mehreren, in Gutflußrichtung weisenden wendelförmig ausgeführten Leitschienen (18) versehen, deren Höhe in Richtung Einzugsbereichsende 20 um den Betrag zunimmt, um den sich der Radius der Hüllkurve des konischen Rotoreinlaufs 5 verringert.

Die Verkleidung des Einzugsbereichs 7 ist über den Adaptierflansch 15 lösbar mit der Verkleidung des Abscheidebereichs 16 verbunden. Der Gutannahmekopf 14 der Verkleidung des Einzugsbereichs 7 ist außerdem in nicht näher erläuterter Weise versteift, so daß er über den in seinem oberen Bereich lösbar angebrachten Haltesteg 21 die vordere Lagerung des Abscheiderotors 6 übernimmt.

Das in den Figuren 1 bis 3 dargestellte Ausführungsbeispiel bezieht sich auf die vorteilhafte Ausgestaltung des Einzugsbereichs einer Axialfluß-Dresch- und Trenneinrichtung oder eines Axialabscheiders in einem Mähdrescher, die beschriebene Ausführung kann aber von einem Fachmann ohne Schwierigkeiten auf Systeme anderer Anwendungsgebiete übertragen werden.

### Bezugszeichenliste

- 1 -: Teilbereich eines Mähdreschers
- 2 -: Zweitrommel-Tangentialdreschwerk
- 3 -: Zuführtrommel
- 4 -: Axialabscheider
- 4a -: Einzugsbereich
- 5 -: Rotoreinlauf
- 6 -: Abscheiderotor
- 7 -: Verkleidung des Einzugsbereichs
- 8 -: Kernrohr des Abscheiderotors
- 9 -: kegelstumpfförmige Erweiterung
- 10 -: wendelförmiger Grundkörper
- 11 -: wendelförmige Verschleißelemente
- 12 -: obere Ummantelung
- 13 -: untere Ummantelung
- 14 -: Gutannahmekopf
- 15 -: Adaptierflansch
- 16 -: Verkleidung des Abscheidebereichs
- 17 -: Lochform
- 18 -: obere Leitschienen
- 19: untere Leitschienen
- 20 -: Einzugsbereichsende
- 21 -: Haltesteg

## Patentansprüche

1. Einzugsbereich eines Axialabscheiders, der aus einem Abscheiderotor und einer in ihrem vorderen Bereich konisch ausgeführten und mit ihrer Verjüngung in Gutflußrichtung weisenden, Ummantelung besteht
**dadurch gekennzeichnet,**
**daß** die ein- oder mehrteilig ausgeführte obere Ummantelung (12) des Einzugsbereichs (7) von einem am Beginn des Rotoreinlaufs (5) halbkreisförmigen Querschnitt bis zum Ende des Einzugsbereichs (20) kontinuierlich in einen dem Querschnitt der übrigen oberen Ummantelung entsprechenden exzentrischen Querschnitt übergeht.

2. Einzugsbereich nach Anspruch 1,
**dadurch gekennzeichnet,**
**daß** die zueinander versetzt angeordneten wendelförmigen Grundkörper (10) des zylindrischen Rotoreinlaufs (5) mit auswechselbaren wendelförmigen Verschleißstücken versehen sind, deren Höhe in Richtung des Einzugsbereichsendes (20) so abnimmt, daß eine konisch geformte Hüllfläche entsteht.

3. Einzugsbereich nach Anspruch 1,
**dadurch gekennzeichnet,**
**daß** die untere halbkreisförmige aus dünnwandigem Blech bestehende Ummantelung (13) des Einzugsbereichs (4a) demontierbar ist.

4. Einzugsbereich nach Anspruch 3,
**dadurch gekennzeichnet,**
**daß** die untere Ummantelung (13) des Einzugsbereichs (4a) in regelmäßigen oder unregelmäßigen Abständen mit Aussparungen versehen ist.

5. Einzugsbereich nach Anspruch 4,
**dadurch gekennzeichnet,**
**daß** die Aussparungen verschiedene Geometrien aufweisen können.

6. Einzugsbereich nach Anspruch 1,
**dadurch gekennzeichnet,**
**daß** die obere Ummantelung (12) des Einzugsbereichs (4a) an ihrer dem Rotoreinlauf (5) zugewanden Innenseite mit mehreren, in Gutflußrichtung weisenden wendelförmig ausgeführten Leitschienen (18) versehen ist, deren Höhe in Richtung Einzugsbereichsende (20) um den Betrag zunimmt, um den sich der Radius der Hüllkurve des konischen Rotoreinlaufs (5) verringert.

## Claims

1. A draw-in region of an axial separator which comprises a separator rotor and a casing which is of a conical configuration in its front region and which faces with its taper in the direction of material flow, **characterised in that** the upper casing (12) of a one-part or multi-part nature of the draw-in region (7) changes from a cross-section which is semicircular at the beginning of the rotor intake (5) to the end of the draw-in region (20) continuously into an eccentric cross-section corresponding to the cross-section of the rest of the upper casing.

2. A draw-in region according to claim 1 **characterised in that** the spiral main bodies (10) which are arranged in mutually displaced relationship of the cylindrical rotor intake (5) are provided with replaceable spiral wearing portions whose height decreases in the direction of the end (20) of the draw-in region in such a way as to provide a conically shaped envelope surface.

3. A draw-in region according to claim 1 **characterised in that** the lower semicircular casing (13) of the draw-in region (4a), which casing comprises thin-gauge metal sheet, is removable.

4. A draw-in region according to claim 3 **characterised in that** the lower casing (13) of the draw-in region (4a) is provided with openings at regular or irregular spacings.

5. A draw-in region according to claim 4 **characterised in that** the openings can be of various geometries.

6. A draw-in region according to claim 1 **characterised in that** the upper casing (12) of the draw-in region (4a) is provided at its inside which is towards the rotor intake (5) with a plurality of spiral guide bars (18) which face in the direction of flow of the material and whose height increases in the direction of the end (20) of the draw-in region by the amount by which the radius of the envelope curve of the conical rotor intake (5) decreases.

## Revendications

1. Zone d'introduction d'un séparateur axial constitué d'un rotor de séparation et d'une enveloppe dont la partie antérieure est conformée en cône qui se rétrécit dans la direction de circulation de flux, **caractérisée en ce que** l'enveloppe (12) supérieure, en une ou en plusieurs parties, de la zone d'introduction (7) passe de manière progressive d'une section semi-circulaire au début de l'entrée de rotor (5) à une section excentrique adaptée à la section du reste de l'enveloppe à la fin de la zone d'introduction (20),.

2. Zone d'introduction selon la revendication 1, **caractérisé en ce que** les corps de base (10) en hélice décalés l'un par rapport à l'autre de l'entrée de rotor (5) sont munis de pièces d'usure en hélice remplaçables, dont la hauteur diminue en direction de la fin de la zone d'introduction (20) de telle sorte qu'une surface enveloppante conique soit formée.

3. Zone d'introduction selon la revendication 1, **caractérisé en ce que** l'enveloppe (13) inférieure semi-circulaire en tôle fine de la zone. d'introduction (4a) est démontable.

4. Zone d'introduction selon la revendication 3, **caractérisé en ce que** l'enveloppe (13) inférieure de la zone d'introduction (4a), à intervalles réguliers ou irréguliers, est pourvue de découpes.

5. Zone d'introduction selon la revendication 4, **caractérisé en ce que** les découpes peuvent présenter des géométries différentes.

6. Zone d'introduction selon la revendication 1, **caractérisé en ce que** l'enveloppe supérieure (12) de la zone d'introduction (4a), sur sa face intérieure tournée vers l'entrée de rotor (5), est pourvue de plusieurs nervures de guidage (18) qui sont orientées dans la direction de l'écoulement du produit et dont la hauteur, en direction de la fin de la zone d'introduction (20), croît de la valeur dont décroît le rayon de la courbe enveloppante de l'entrée de rotor (5).
